**Europäisches Patentamt**

**European Patent Office**

**Office européen des brevets**

(11) Veröffentlichungsnummer: **0 186 880**
**B1**

(12) **EUROPÄISCHE PATENTSCHRIFT**

(45) Veröffentlichungstag der Patentschrift: **20.06.90**

(51) Int. Cl.⁵: **B 60 R 22/46**

(21) Anmeldenummer: **85116365.9**

(22) Anmeldetag: **20.12.85**

(54) Strammvorrichtung für einen Rücksitzgurt in Kraftfahrzeugen.

(30) Priorität: **21.12.84 DE 3446864**
**31.01.85 DE 3503188**
**21.05.85 DE 3518121**
**11.10.85 DE 3536394**

(43) Veröffentlichungstag der Anmeldung:
**09.07.86 Patentblatt 86/28**

(45) Bekanntmachung des Hinweises auf die
Patenterteilung:
**20.06.90 Patentblatt 90/25**

(84) Benannte Vertragsstaaten:
**DE FR GB IT SE**

(56) Entgegenhaltungen:
**DE-A-2 543 068    FR-A-2 494 997**
**FR-A- 739 513    GB-A-1 008 764**
**FR-A-2 180 151    GB-A-1 407 954**
**FR-A-2 382 903    US-A-3 292 744**

**PATENT ABSTRACTS OF JAPAN, Band 6, Nr. 54**
**(C-97)932r, 9. April 1982; & JP - A - 56 168 858**
**(DAICEL) 25.12.1981**

(73) Patentinhaber: **Autoflug GmbH & Co**
**Fahrzeugtechnik**
**Industriestrasse 10 Postfach 1180**
**D-2084 Rellingen 2 (DE)**

(72) Erfinder: **Sedlmayr, Gerhard, Dr.**
**Königgrätzstrasse 1**
**D-2000 Hamburg 52 (DE)**
Erfinder: **Grassmuck, Jürgen**
**Oeltingsallee 27**
**D-2084 Pinneberg (DE)**
Erfinder: **Baden, Hans-Heinrich**
**Lütjenmoor 30**
**D-2000 Norderstedt (DE)**
Erfinder: **Todt, Karlheinz**
**Kirchenstrasse 61**
**D-2200 Elmshorn (DE)**
Erfinder: **Krützfeldt, Herbert**
**Samlandstrasse 179**
**D-2000 Hamburg 62 (DE)**

(74) Vertreter: **Müller, Karl-Ernst Dr. et al**
**c/o Patentanwälte Becker & Müller**
**Eisenhüttenstrasse 2**
**D-4030 Ratingen 1 (DE)**

## Beschreibung

Die Erfindung betrifft eine Strammvorrichtung für einen Rüsksitegurt in Kraftfahrzeugen mit wenigstens einem Beckengurt, der mit seinem einen Ende an einen fahrzeugfesten Teil befestigt und an seinem anderen Ende mit einem Gurtschloßteil ausgestattet ist, und einem aus einem Drahtseilabschnitt bestehenden Verankerungsteil als Träger des anderen Gurtschloßteils, wobei das Verankerungsteil durch eine fahrzeugfest angeordnete Umlenkvorrichtung geführt und danach mit einer im Gefahrenfall auslösbaren pyrotechnischen Antriebseinrichtung für die Bewegung des Verankerungsteils verbunden ist.

Eine gattungsgemäße Strammvorrichtung ist in der FR—A—2 180 151 beschrieben; hierbei ist das aus einem Drahtseilabschnitt bestehende Verankerungsteil durch einen einfachen am Fahrzeug befestigten U-förmigen Bügel geführt und dabei leicht umgelenkt und dann mit einer in Längsrichtung des Fahrzeugsitzes angeordneten in eine pyrotechnische Kolbeneinheit als Antriebsvorrichtung einziehbaren Zugstange verbunden.

Aus dieser bekannten Anordnung ergibt sich der Nachteil, daß eine derartige Vorrichtung in der Zuordnung ihrer Bauteile sehr raumaufwendig ist, so daß diese bekannte konstruktive Anordnung bei Rücksitzgurten nicht anwendbar ist; so zeigt der Stand der Technik gemäß der FR—A—2 180 151 auch nur eine Anordnung einer bekannten Strammvorrichtung bei einem Vordersitz. In dieser Anordnung ist aber mangels zur Verfügung stehenden Raumes diese Strammvorrichtung unter einer Rücksitzbank nicht anzuordnen. Ein weiterer Nachteil der bekannten Strammvorrichtung ergibt sich daraus, daß aufgrund derr Einschaltung der Zugstange zwischen Antriebsvorrichtung und Verankerungsteil sich Schwachstellen in der Verbindung der Bauteile miteinander ergeben, die bei der großen zu erwartenden Belastung bei Auslösung der Strammvorrichtung nachteilig sind.

Der Erfindung liegt daher Aufgabe zugrunde, eine Strammvorrichtung der angegebenen Gattung so weiterzubilden, daß die Strammvorrichtung auch bei den beengten Raumverhältnissen unter einer Rücksitzbank bei einem Rücksitzgurt anwendbar ist; weiterhin solen Schwachstellen in der Kraftübertragung vermieden sein.

Die Lösung dieser Aufgabe ergibt sich daraus, daß die Umlenkvorrichtung als Umlenkblock mit einem gebogenen Kanal ausgebildet und die aus einer druckmittelbetätigten Kolbeneinheit mit Kolbenkammer und einem darin beweglichen Kolben bestehende Antriebsvorrichtung unmittelbar am Ausgang des Kanals angeordnet und das freie Ende des durch den Kanal des Umlenkblocks geführten Verankerungsteils am Kolben angeschlagen ist. Vorteilhafte Ausgestaltungen und Weiterbildungen der Erfindung sind in den Unteransprüchen angegeben.

Soweit es aus der GB—A—1 008 764 bekannt ist, das Gurtband des Beckengurtes des fahrzeugseitigen Sicherheitsgurtsystems selbst über einen Winkel von etwa 150 Grad umzulenken und in eine zugeordnete Antreibsvorrichtung einzuführen, so läßt sich einerseits diese Lösung bei einem aus einem Drahtseilabschnitt bestehenden Verankerungsteil nicht verwirklichen, und andererseits bietet das Gurtband als Träger des Gurtschloßteils nicht dfen erforderlichen Widerstand zum Einpicken der Schloßzunge, so daß hinsichtlich des Verankerungsteils eine Vewendung von Gurtband nicht in Frage kommt.

Mit der Erfindung ist zunächst der Vorteil verbunden, daß durch die am herkömmlichen Verankerungsteil angreifende Strammvorrichtung keine konstruktiven Änderungen am Sicherheitsgurtsystem erforderlich sind und der diesbezügliche Sicherheitsstandard beibehalten werden kann. Weiterhin ist bei der erfindungsgemäßen Lösung für die am Verankerungsteil angreifende Strammvorrichtung im Rücksitzbereich des Kraftfahrzeuges genügend Platz vorhanden, da wegen der Anordnung des Gurtschlosses oberhalb der Sitzpolsterung un der Befestigung des Verankerungsteiles unter der Sitzpolsterung an der Bodengruppe des Kraftfahrzeuges ein ausreichender Weg zur Verfügung steht, über den das Schloß bis an die Bodengruppe gezogen und der am eingerasteten Schloß angreifende Sicherheitsgurt somit gestrammt werden kann.

Weiterhin ist es in vorteilhafter Weise vorgesehen, daß nach Ablauf der Strammbewegung eine Rücklaufsperre für das sichere Festhalten der angeschnallten Person in der durch die Strammung herbeigeführten Position sorgt, wobei die Rücklaufsperre einerseits am Kolben der Antriebsvorrichtung wie auch am Verankerungsteil selbst im Bereich des Umlenkblocks angeordnet sein kann.

Sofern sich die Schlösser unmittelbar nebeneinander befinden, ist nach einem weiteren Ausführungsbeispiel der Erfindung vorgesehen, die den Schlössern zuzuordnenden Verankerungsteile durch eine gemeinsame Umlenkvorrichtung zu führen und über eine Antriebsvorrichtung im Sinne einer Strammbewegung zu betätigen, wobei die Antriebsvorrichtung über zwei unabhängig voneinander auszulösende Energiequellen verfügt, welche entsprechend der Benutzungslage der zugeordneten Sicherheitsgurte getrennt scharf geschaltet sind.

In der Zeichnung sind Ausführungsbeispiele der Erfindung wiedergegeben, welche nachstehend beschrieben sind. Es zeigen:

Fig. 1 eine Strammvorrichtung mit Gleitumlenkung in einer teilweise geschnittenen Seitenansicht,

Fig. 2 den Gegenstand der Fig. 1 in einer Aufsicht,

Fig. 3 eine Strammvorrichtung mit Rollenumlenkung in einer teilweise geschnittenen Seitenansicht,

Fig. 4 die Strammvorrichtung gemäß Fig. 1 mit einer anderen Rücklauf sperre,

Fig. 5 eine Strammvorrichtung für zwei Gurtschlösser in schaubildlich-schematischer Darstellung,

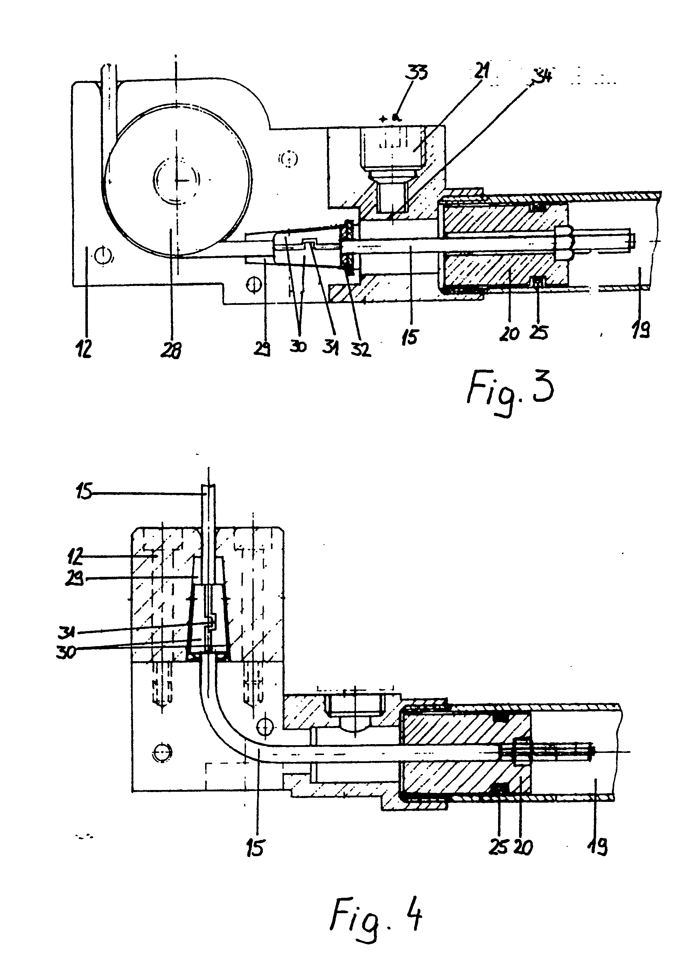

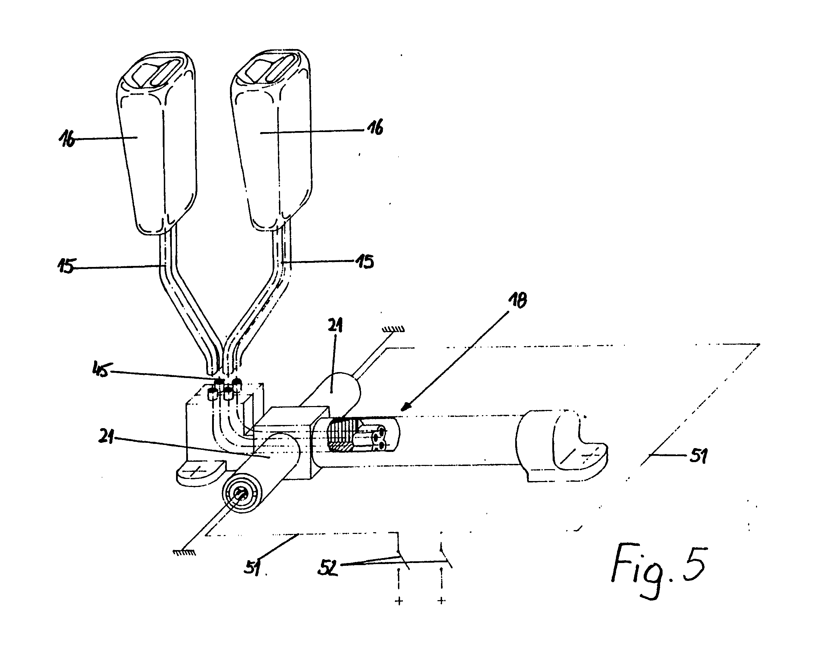

Fig. 5 eine Strammvorrichtung für zwei nebeneinander angeordnete Gurtschloßsser,

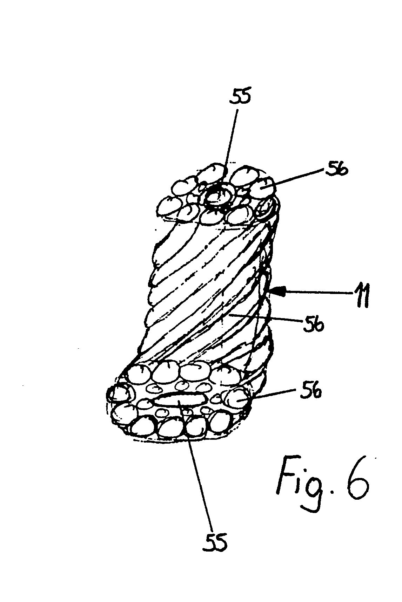

Fig. 6 ein Verankerungsteil in geschnittener Vorderansicht.

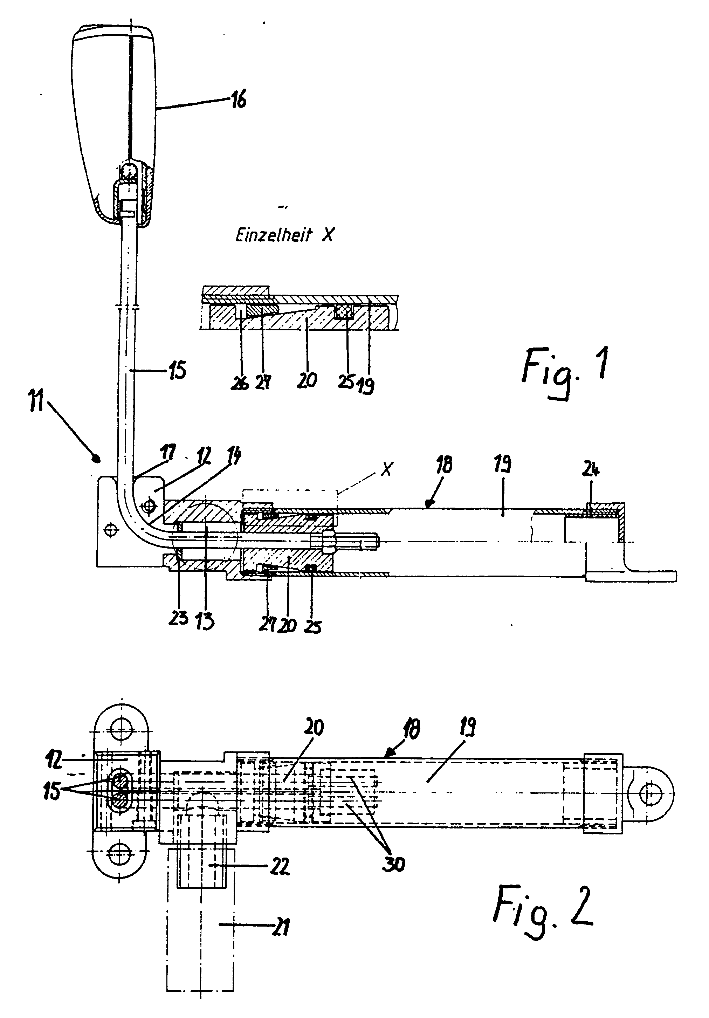

Wie zunächst in den Figuren 1—4 gezeigt, besteht eine Umlenkvorrichtung 11 im wesentlichen aus einem Block 12, in welchem zur Hindurchführung und Umlenkung eines Verankerungsteils 15 ein Kanal ausgespart ist, dessen Abmessungen im wesentlichen mit den Abmessungen des Verankerungsteils übereinstimmen. Der Kanal 13 weist im Block 12 eine Biegung auf, so daß Kanaleingang und Kanalausgang einen Winkel von etwa neunzig Grad zueinander bilden. Der Radius 14 der Biegung hängt dabei von der Biegsamkeit des Verankerungsteils 15 ab.

Das Verankerungsteil 15, welches an seinem oberen Ende ein Gurtschloß 16 trägt, ist von dieser Seite her durch den Kanal 13 bis zum Kanalende geführt, und um Schwenkbewegungen des Schlosses 16 zu erleichtern und gleichzeitig einen sicheren Einzug des Verankerungsteils 15 in den Kanal 13 zu gewährleisten, weist der Kanal 13 an seinem oberen, dem Schloß 16 zugewandten Ende einen Trichter 17 auf. Im vorliegenden Ausführungsbeispiel besteht das Verankerungsteil 15 aus zwei Drahtseilabschnitten mit einer Kunststoffummantelung, welche als Doppelseil am Gurtschloß 16 angeschlagen sind.

Mit seinem aus dem Block 12 herausragenden Ende ist das Verankerungsteil 15 in einer pyrotechnischen Antriebsvorrichtung 18 eingeführt, welche im wesentlichen aus einer Kolbenkammer 19 besteht, in der ein Kolben 20 längsbeweglich angeordnet ist. An diesem Kolben 20 ist das Verankerungsteil 15 in geeigneter Weise befestigt, so daß auch eine explosionsartige Vorwärtsbewegung des Kolbens 20 nicht zu einem Abriß des Verankerungsteils 15 vom Kolben 20 führt.

Seitlich an der Kolbenkammer 19 ist ein Gasgenerator 21 über ein Gewindestück 22 so angeschraubt, daß dieser über ein Teil des Kanals 13 mit der Kolbenkammer 19 verbunden ist. Zur Abdichtung des Kanals 13 ist dabei eine Stauscheibe 23 vorgesehen. Weiterhin ist am Ende der Kolbenkammer 19 ein Dämpfer 24 angeordnet, welcher das Auftreffen des Kolbens 20 beim Bewegungsablauf auf den Kolbenkammerboden abbremst. Weiterhin ist der Kolben 20 in seinem vorderen Bereich zur Verbesserung seiner Gleitfähigkeit sowie zur Entklapperung der Bauteile mit einem in den Kolben 20 eingelassenen Gleitring 25 versehen.

Entsprechend Figur 1 ist die Rücklaufsperre am Kolben 20 ausgebildet, indem am Außenumfang des Kolbens 20 ringförmig eine Ausnehmung 26 ausgespart ist, in welcher ein Sperrelement 27 angeordnnet ist. In Richtung auf den Kolbenkammerboden verjüngt sich die Ausnehmung 26 bis zur Anlage des Kolbens 20 an der Wandung des Rohres 19. Entsprechend der dadurch vorgegebenen konischen Form der Ausnehmung 26 ist auch das Sperrelement 27 als Ring mit einem keilförmigen Querschnitt ausgebildet, so daß die an den Bauteilen ausgestalteten schiefen Ebenen aufeinander gleiten. Der Sperring 27 ist mit Abstand vom Tiefsten der Ausnehmung 26 eingesetzt, so daß sich im Bewegungsablauf ein schlagartiger Beschleunigungseffekt ergibt. Zur Verbesserung seiner Sperrwirkung ist der keilförmige Sperring 27 an seinem hinteren Ende sich schwalbenschwanzförmig erweiternd ausgebildet und bei einer weiterhin geschlitzten Ausbildung unter Vorspannung in den durch die Ausnehmung 26 und die Kolbenkammerwandung vorgegebenen Raum eingesetzt.

Die beschriebene Vorrichtung arbeitet folgendermaßen: Im Gefahrenfall, also zu Beginn eines Unfalls, löst ein fahrzeugfester Sensor über elektrischge Leitungen 33 die Gaspatrone 21 aus. Die somit entstehenden Explosionsgase treiben den Kolbenn 20 in der Kolbenkammer 19 von der Umlenkvorrichtung 11 weg, so daß der Kolbenn 20 das Verankerungsteil 15 durch den Kanal 13 der Umlenkvorrichtung hindurch hinter sich herzieht. Auf diese Weise wird das Schloß bis zum Anschlag an der Umlenkvorrichtung gezogen, wodurch der zur Verfügung stehende Strammweg vollständig ausgenutzt ist. Damit werden bei einem Dreipunkt-Sicherheitsgurt gleichzeitig der Schultergurt — wie auch der Beckengurt — und bei einem Beckengurt eben dieser in ausreichender Weise gestrammt und die angeschnallte Person auf ihrem Stz gesichert.

Die Rücklaufsperre kommt zum Tragen, sobald das Ende des Strammweges erreicht ist, wobei der Sperring 27 aufgrund der auf ihn ausgeübei der Beschleunigung in die keilförmige Verengung der Ausnehmung 26 einläuft und sich verklemmt. Kommt es nun zu einer Zugkraft auf den Kolben infolge der am Schloß und am Verankerungsteil eingreifenden Kräfte, so verhindert der Sperring 27 ein Rücklaufen des Kolbens 20 in der Kammer 19, indem der mit Vorspannung eingelegte und verkeilte Sperring sich mit seiner schwalbenschwanzförmigen Erweiterung gegen die Kammerwandung, unter Umständen bis zu einem Einschnitt in dieselbe, abstützt.

In Figur 3 ist ein anderes Ausführungsbeispiel gezeigt, und zwar sowohl bezüglich der Umlenkung als auch bezüglich der Rücklaufsperre. Die Umlenkung des ebenfalls seilförmigen Verankerungsteils 14 erfolgt hier über eine in dem Umlenkblock 12 angeordnete Rolle 28, welche zwei Umfangsvertiefungen zur Aufnahme des Verankerungsteils aufweist.

Bezüglich der Rücklaufsperre ist in dem Block 12 eine sich keilförmig in Strammrichtung erweiternde Kammer 29 angeordnet, in welcher formentsprechend zwei das Verankerungsteil 15 umschließende Klemmbacken 30 angeordnet sind. Die Klemmbacken 30 umschließen in Ruhelage das Verankerungsteil 15 mit nur geringer Vorspannung und sind durch eine Nut-Feder-Verbindung 31 miteinander verkoppelt. Ein in der Kammer 29 zwischen Kammerboden und Klemmbacken 30 angeordneter Ring 32 sorgt dabei zusätzlich für eine ständige leichte axiale Vorspannung.

Nach Abschluß der Strammbewegung wirkt die Rücklaufsperre derart, daß bei einer am Verankerungsteil 15 angreifenden Zugkraft die Klemmbacken 30 in die keilförmige Verengung der Kammer 29 hineingezogen werden, wobei durch den eine Vorspannung vermittelnden Ring 32 sichergestellt ist, daß schon eine leichte Rücklaufbewegung des Verankerungsteils 15 die Klemmung herbeiführt.

Die Klemmwirkung kann bei diesem Ausführungsbeispiel noch verbessert werden durch eine entsprechend reibungserhöhende Ausbildung der am Verankerungsteil 15 anliegenden Innenseiten der Klemmbacken 30, wobei beispielsweise diese Innenseiten eine Vorprägung entsprechend dem Seilschlag des Verankerungsteils 15 erhalen können.

Weiterhin ist entsprechend Figur 3 der Gasgenerator 21 in den Umlenkblock 12 integriert, was eine erhebliche Einsparung an Bauhöhne bedeutet. Bei Zündung des Gasgenerators 21 über die von einem nicht dargestellten Fahrzeugsensor herkommenden elektrischen Leitungen 33 erfolgt zunächst ein Aufsprengen der entsprechend vorgesehenen Sollbruchstelle 34.

In Figur 4 ist nun die Rücklaufsperre gemäß Figur 3 vor der Umlenkung des Verankerungsteils angeordnet, was den besonderen Vorteil mit sich bringt, daß die Wirkungsrichtung der auf das Schloß und das Verankerungsteil einwirkenden Zugkräfte und der dadurch auf den Umlenkblock 12 und dessen Befestigungsmittel an der Fahrzeugkarosserie übertragenden Kräfte gleich ist, was ermöglicht, den sich an den Umlenkblock 12 anschließenden Teil der Strammvorrichtung aus einem entsprechend einfachen Material, beispielsweise Leichtmetall oder Kunststoff, herzustellen, da dort keine Kraftübertragung oder Kraftaufnahme mehr erfolgt.

Letztgenannter Vorteil tritt auch bei dem Ausführungsbeispiel gemäß Figur 3 ein, da auch dort die Rücklaufsperre im Bereich der Umlenkung angeordnet ist, während die Antriebsvorrichtung selbst von Kräften freibleibt.

Nach einem weiteren Ausführungsbeispiel der Erfindung kann der Kanal 13 im Umlenkblock 12 auch durch ein vorgebogenes Rohrstück gebildet sein, wobei der Umlenkblock um das Rohr 13 herumgeformt, vorzugsweise gespritzt ist. Dies bedeutet eine große Erleichterung für die Herstellung der Umlenkvorrichtung.

In Figur 5 ist ein Ausführungsbeispiel der Erfindung dargestellt, bei dem die Verankerungsteile 15 zweier unmittelbar benachbarter Schlösser 16 durch einen gemeinsamen Umlenkblock 12 geführt sind, so daß die Antriebseinrichtung 47 unmittelbar am Ausgang des Umlenkblocks 12 angreift. Um in Abhängigkeit von der Benutzungslage der den Schlössern zuzuordnenden Sicherheitsgurtsysteme die Schlösser 16 auch getrennt strammen zu können, ist vorgesehen, an der Antriebseinrichtung 47 zwei getrennte Treibsätze 21 anzuordnen, welche über getrennte Stromkreise 51 und Schalter 52 scharf geschaltet sind, so daß jedem Schloß 16 ein eigener Treibsatz 21 zugeordnet ist. Die Treibsätze 21 sind über Stromkreise 51 und Schalter 52 scharf zu schalten. Die Schalter 52 können dabei als Sitzkontaktschalter ausgebildet sein oder aber Bezug auf das Anlegen des Sicherheitsgurtsystems nehmen, indem entsprechende Schaltkontakte im Gurtschloß angeordnet oder aber ein das Anlegen des Sicherheitsgurtes anzeigende Abtaster am Gurtaufroller vorgesehen ist.

Ist nun nur eines der beiden Sicheheitsgurtsysteme angelegt, so ist auch nur ein Treibsatz 21 über den zugeordneten Schalter 52 und der Stromkreis 51 scharf geschaltet, so daß die Antriebsenergie im Auslösefall nur mit der halben Strammenergie auf das Verankerungsteil einwirkt. Sind dagegen beide Schlösser im Gebrauch, so werden beide Treibsätze 21 im Gefahrenfall ausgelöst, wodurch genügend Energie zur Verfügung steht, auch beide Sicherheitsgurtsysteme über die Bewegung der Schlösser auf den Umlenkblock zu strammen.

Wie nicht weiter dargestellt, kann je nach den für den Einbau der Strammvorrichtung zur Verfügung stehenden Platzverhältnissen vorgesehen sein, hier einen Rotationsstrammer einzusetzen, bei dem entsprechende Übertragungsglieder 46 aufgewickelt werden.

Die Erfindung ist schließlich insgesamt besonders vorteilhaft mittels eines Verankerungsteils 15 zu verwirklichen, welches den in Figur 6 dargestellten Aufbau aufweist. Wesentlich dabei ist, daß sich das in an sich bekannter Weise als Drahtseil ausgebildete Verankerungsteil 15 an der Stelle der höchsten Beanspruchung im Umlenkelement 11 der im Umlenkblock 12 ausgebildeten Oberfläche in Form einer Abplattung anpassen kann. Bei gleichem Seilquerschnitt ist auf diese Weise ein geringerer Biegeradius möglich; gleichzeitig wird durch die Abplattung die höchste Beanspruchung auf eine größere Fläche verteilt und damit herabgesetzt. Geringere Reibungswiderstände und damit schnellere Durchzugsbewegungen des Verankerungsteils 15 durch das Umlenkelement 11 sind die vorteilhafte Folge.

Hierzu weist das Seil 15 eine elastisch verformbare Seele 55, bestehend beispielsweise aus einem zäh-elastischen Kunststoffrohr, auf, um welche in bekannter Form Drahtlitzen 56 geschlagen sind. Darüber ist eine Ummantelung aus einem Material mit geringem Reibungsbeiwert geschrumpft, so daß die Ummantelung faltenfrei einer Biegung des Verankerungsteils 15 folgt. Wie die Zeichnung deutlich erkennen läßt, nimmt die Seele 55 des Verankerungsteils 15 und somit das Verankerungsteil selbst bei der Umbiegung in dem Umlenkelement 11 einen ovalen Querschnitt an, der sich nach dem Austritt des Verankerungsteils 15 aus dem Umlenkelement 11 mit Streckung des Verankerungsteils wieder in die runde Form zurückbildet. Das Verankerungsteil läßt sich dabei mittels einer Kopfklemme mit einem in die hohle Seele 55 einzuführenden Dorn aus einem beispielsweise kalt verformbaren Stahl leicht mit den das Verankerungsteil antreibenden Elementen verbinden.

## Patentansprüche

1. Strammvorrichtung für einen Rücksitzgurt in Kraftfahrzeugen mit wenigstens einem Beckengurt, der mit seinem einen Ende an einem fahrzeugfesten Teil befestigt und an seinem anderen Ende mit einem Gurtschloßteil ausgestattet ist, un deinem aus einem Drahtseilabschnitt bestehenden Verankerungsteil (15) als Träger des anderen Gurtschloßteils (16), wobei das Verankerungsteil (15) durch eine fahrzeugfest angeordnete Umlenkvorrichtung (11) geführt und danach mit einer im Gefahrenfall auslösbaren, pyrotechnischen Antriebsvorrichtung (18) für die Bewegung des Verankerungsteils (15) verbunden ist, dadurch gekennzeichnet, daß die Umlenkvorrichtung als Umlenkblock (11) mit einem gebogenen (14) Kanal (13) ausgebildet ist, wobei das Maß der Biegung des Kanals (13) dem fahrzeugbedingten Maß der erforderlichen Umlenkung des Verankerungsteils (15) entspricht, und die aus einer druckmittelbeaufschlagten Kolbeneinheit mit einer Kolbenkammer (19) und einem darin beweglichen Kolben (20) besehende Antriebsvorrichtung (18) unmittelbar am Ausgang des Kanals (13) des Umlenkblocks (11) angeordnet und das freie Ende des durch den Kanal (13) geführten Verankerungsteils (15) am Kolben (20) angeschlagen ist.

2. Strammvorrichtung nach Anspruch 1, dadurch gekennzeichnet, daß als Rücklaufsperre der in der rohrförmigen Kolbenkammer (19) geführte und mit dem Verankerungsteil (15) verbundene Kolben (20) an seinem Außenumfang eine Ausnehmung (26) aufweist, in welcher ein sich zwischen Kolben (20) und Rohr (19) abstützendes Sperrelement (27) angeordnet ist.

3. Strammvorrichtung nach Anspruch 2, dadurch gekennzeichnet, daß als Rücklaufsperre zwei das Verankerungsteil (15) zwischen sich einfassende, in einer in dem Umlenkblock (12) ausgebildeten Kammer (29) angeordnete Klemmbacken (30) angeordnet sind, wobei sich die Kammer (29) und die Klemmbacken (30) in Bewegungsrichtung des Verankerungsteils (15) konisch erweitern.

4. Strammvorrichtung nach einem der Ansprüche 1—3, dadurch gekennzeichnet, daß eine zentrale Antriebsvorrichtung (18) für mehrere Verankerungsteile (15), welche jeweils durch eine zugeordnete fahrzeugfeste Umlenkvorrichtung (11) geführt und danach mit der im Gefahrenfall auslösbaren Antriebsvorrichtung (18) verbunden sind, vorgeshen ist.

5. Strammvorrichtung nach Anspruch 4, dadurch gekennzeichnet, daß zwei voneinander beabstandete Gurtschlösser (16) an einem gemeinsamen, jeweils zum zugeordneten Gurtschloß (16) über eine zugeordnete Umlenkvorrichtung (11) geführten Verankerungsteil (15) befestigt sind, an den zwischen den Umlenkvorrichtungen (12) die als an sich bekannter pyrotechnischer Linearstrammer ausgebildete und über ein Verbindungsglied (14) mit dem Verankerungsteil (15) verbundene Antriebsvorrichtung (18) angreift, wobei das Verbindungsglied (14) über ein Gleitstück (48) am Verankerungsteil (15) angreift.

6. Strammvorrichtung nach Anspruch 4, dadurch gekennzeichnet, daß zwei Verankerungsteile (15) als Träger je eines zugeordneten Gurtschlosses (16) durch eine gemeinsame Umlenkvorrichtung (11) geführt und anschließend mit der Antriebsvorrichtung (18) verbunden sind und daß die Antriebsvorrichtung (18) den Gurtschlössern (10) zugeordnete, getrennt auslösbare Energiequellen (21) aufweist.

7. Strammvorrichtung nach einem der Ansprüche 1—6, dadurch gekennzeichnet, daß der in der Umlenkvorrichtung (11) ausgebildete Kanal (13) als vorgebogenes Rohr ausgebildet und der Umlenkblock (12) das Rohr (13) umgebend geformt, vorzugsweise aus einem spritzfähigen Material um das Rohr (13) gespritzt ist.

8. Strammvorrichtung nach einem der Ansprüche 1—7, dadurch gekennzeichnet, daß der im Umlenkblock (12) eines jeden Umlenkelementes (11, 36) ausgebildete Kanal (13) an seinem dem Gurtschloß (16) zugewandten Ende eine Trichter (17) aufweist.

9. Strammvorrichtung nach einem der Ansprüche 1—8, dadurch gekennzeichnet, daß die jeweils eingerichtete Rücklaufsperre nach Art eines Stoßdämpfers zum definierten Nachgeben bei auftretenden vorbstimmten Lastspitzen ausgebildet ist.

## Revendications

1. Dispositif de tension d'une ceinture de siège arrière de véhicules automobiles, comportant au moins une ceinture sous-abdominale qui, par l'une de ses extrémités, est fixée sur un élément solidaire du véhicule, et qui, par son autre extrémité, est équipée d'une partie de serrure de ceinture, ainsi qu'un élément d'ancrage (15) constitué d'une portion de câble métallique, servant de support à l'autre parte de serrure de ceinture (16), l'élément d'ancrage (15) étant guidé par un dispositif de renvoi (11) solidaire du véhicule et relié à un dispositif d'entraînement (18) pyrotechnique, pouvant être déplacé en cas de danger, pour le déplacement de l'élément d'ancrage (15), caractérisé en ce que le dispositif de renvoi est un bloc de renvoi (11) avec un canal (13) courbé (14), la grandeur de la courbure du canal (13) correspondant à la grandeur déterminée par le véhicule, du renvoi nécessaire de l'élément d'ancrage (15), et en ce que le dispositif d'entraînement (18), constitué d'une unité à piston soumise à l'action d'un fluide sous pression, avec une chambre de piston (19) et un piston (20) se déplaçant à l'intérieur de celle-ci, est placé directement à la sortie du canal (13) du bloc de renvoi (1) et en ce que l'extrémité libre de l'élément d'ancrage (15), guidé à travers le canal (13), est fixée sur le piston (20).

2. Dispositif de tension selon la revendication 1, caractérisé en ce que le piston (20), guidé dans la chambre de piston (19) tubulaire et relié à l'élément d'ancrage (15), présente, pour servir de blocage de retour, un évidement (26) dans lequel est placé un élément de blocage (27) prenant appui entre le piston (20) et le tube (19).

3. Dispositif de tension selon la revendication 1, caractérisé en ce qu'on prévoit, comme blocage de retour, deux mâchoires de serrage (30) serant entre elles l'élément d'ancrage (15), placées dans une chambre (20) formée dans le bloc de renvoi (12), la chambre (29) et les mâchoires de serrage (30) s'élargissant coniquement dans le sens de déplacement de l'élément d'ancrage (15).

4. Dispositif de tension selon l'une des revendications 1 à 3, caractérisé en ce qu'on prévoit un dispositif d'entraînement (18) central pour plusieurs éléments d'ancrage (15), qui sont guidés, chacun, par un dispositif de renvoi (11) associé, solidaire du véhicule, et sont reliés au dispositif d'entraînement (18) se déclenchant en cas de danger.

5. Dispositif de tension selon la revendication 4, caractérisé en ce que deux serrures de ceinture (16), espacées l'une de l'autre, sont fixées sur un élément d'ancrage (15) commun, guidé vers la serrure de ceinture (16) associée, par un dispositif de renvoi (11) associée, sur lequel agit le dispositif d'entraînement (18), entre les dispositifs de renvoi (12), qui se présente sous la forme d'un tendeur linéaire pyrotechnique connu en soi et qui est relié à l'élément d'ancrage (15) par un organe de liaison (14), l'orange de liaison (14) agissant sur l'élément d'ancrage (15) par un coulisseau (48).

6. Dispositif de tension selon la revendication 4, caractérisé en ce que deux éléments d'ancrage (15), servant chacun, de support à une serrure de ceinture (16) associée, sont guidés par un dispositif de renvoi (11) commun et reliés, ensuite, au dispositif d'entraînement (18), et en ce que le dispositif d'entraînement (18) comporte des sources d'énergie (21) associées aux serrures de ceinture (10), pouvant être déclenchées séparément.

7. Dispositif de tension selon l'une des revendications 1 à 6, caractérisé enn ce que le canal (13) formé dans le dispositif de renvoi (11) est un tube précourbé et en ce que le bloc de renvoi (12) est formé de manière à entourer le tube (13), de préférence moulé par injection autour du tube (13), dans une matière pouvant être injectée.

8. Dispositif de tension selon l'une des revendications 1 à 7, caractérisé en ce que le canal (13) formé dans le bloc de renvoi (12) de chaque élément de renvoi (11, 36), présente une partie conique (17) à son extrémité tournée vers la serrure de ceinture (16).

9. Dispositif de tension selon l'une des revendications 1 à 8, caractérisé en ce que le blocage de retour, quel qu'il soit, est conçu à la manière d'un parechocs pour céder, de manière définie, lorsque se présentent des pointes de charge déterminées.

**Claims**

1. Tightening device for a rear seat belt in a motor vehicle, having at least one lap belt which is secured at one end to a component integral with the vehicle and is provided at its other end with a belt buckle portion, and an anchorage part (15) consisting of a length of wire cable as the carrier of the other belt buckle portion (16), the anchorage part (15) being guided through guide means (11) mounted fixedly on the vehicle and thereafter being connected to a pyrotechnic drive mechanism (18) arranged to be actuated in the event of an emergency in order to move the anchorage part (15), characterised in that the guide means are constructed as a guide block (1) having a curved (14) channel (13), the degree of curvature of the channel (13) corresponding to the degree of guiding of the anchorage part (15) required by the design of the vehicle, and the drive mechanism (18) consisting of a piston unit, acted upon by pressure medium, having a piston chamber (19) and a piston (20) movable therein, is mounted directly at the exit of the channel (13) from the guide block (11) and the free end of the anchorage part (15) guided through the channel (13) is attached to the piston (20).

2. Tightening device according to claim 1, characterised in that the piston (20) which is guided in the tubular piston chamber (19) and connected to the anchorage part (15) has a recess (26) on its outer circumference in which is mounted a blocking element (27) supported between the piston (20) and tube (19), in order to serve as return prevention means.

3. Tightening device according to claim 2, characterised in that there are provided, as return prevention means, two clamping jaws (30) disposed in a chamber (29) formed in the guide block (12) and enclosing the anchorage part (15) between them, the chamber (29) and the clamping jaws (30) widening out in a conical shape in the direction of movement of the anchorage part (15).

4. Tightening device according to one of claims 1 to 3, characterised in that a central drive mechanism (18) is provided for a plurality of anchorage parts (15), each of which is guided through an associated guide means (11) integral with the vehicle and thereafter attached to the drive mechanism (18) which is arranged to be actuated in the event of an emergency.

5. Tightening device according to claim 4, characterised in that two spaced belt buckles (16) are fixed to a common anchorage part (15) leading to the associated belt buckle (16) via associated guide means (11), the drive mechanism (18) which is constructed as a pyrotechnic linear tightening device known *per se* and which is connected to the anchorage part (15) via a connecting member (14) acts on said anchorage part (15) between the guide means (12), whilst the connecting member (14) acts on the anchorage part (15) via a sliding member (48).

6. Tightening device according to claim 4, characterised in that two anchorage parts (15), each carrying an associated belt buckle (16), are guided through guide means (11) common to both and are subsequently connected to the drive mechanism (18) and the drive mechanism (18) has energy sources (21) associated with the belt buckles (10) and capable of being actuated separately.

7. Tightening device according to one of claims 1 to 6, characterised in that the channel (13) formed in the guide mechanism (11) is constructed as a pre-bent tube and the guide block (12) is shaped to surround the tube (13), and is preferably injection moulded around the tube (13) from a material capable of being injection moulded.

8. Tightening device according to one of claims 1 to 7, characterised in that the channel (13) formed in the guide block (12) of each guide element (11, 36) has a funnel (17) at its end facing the belt buckle (16).

9. Tightening device according to one of claims 1 to 8, characterised in that the return prevention means provided in each case is constructed in the manner of a shock absorber for yielding a defined amount when subjected to predetermined load peaks.

Einzelheit X

Fig. 1

Fig. 2

Fig. 3

Fig. 4

Fig. 5

Fig. 6